# EUROPEAN PATENT APPLICATION

(11) **EP 0 622 024 A1**
(43) Date of publication of application: **02.11.1994**
(21) Application number: 93830184.3
(22) Date of filing: 30.04.1993
(51) Int. Cl.: A23C 9/123

(54) **Yoghurt added with a prefermented cereals meal mixture in soja extract and process for preparing the same**

(30) Priority: 27.04.1993 IT MI930821
(71) Applicant: SITIA-YOMO S.p.A., I-20139 Milano (IT)
(72) Inventor: Cavaliere Vesely, Renata, Milano (MI) (IT); Giani, Giovanni, Pasturago Di Vernate (MI) (IT); Cingoli, Vittorio, Milano (MI) (IT); Maiocchi, Gianluigi, Codogno (MI) (IT)
(74) Representative: Righetti, Giuseppe

(57) **Abstract**

A new yoghurt which contains live lactic ferments, particularly suitable for early childhood feeding is described, comprising a yoghurt base and a cereals meal mixture in soja extract, said mixture being prefermented with a Bifidobacterium Infantis and eventually Streptococcus thermophilus colture, and then, if it is desired, to the product thus obtained homogenized, aromatized and refined fruit pulp is added. A process for its preparation and its use in the early childhood feeding are also disclosed.

## Description

The present invention relates to a new yoghurt added with a valuable cereals meal mixture, particularly oats, rice and wheat seed, in soja extract, said mixture being prefermented with Bifidobacterium Infantis eventually added with Streptococcus thermophilus, and a process for preparing the same. The new product object of the present invention, combining freshness, tastiness and texture to a strong nutritional and salutistic connotation and to a high live lactic ferments content, is particularly suitable for the early childhood feeding.

Products for childhood feeding containing yoghurt and milk fermented with Bifido Infantis, and sometime with Lb. acidophilus, and fruit, are well known in the art. These are however preparations either devoid of live specific flora or products in which Bifido Infantis (and eventually Lb. acidophilus) performs its fermentative activity exclusively on fermented milk (YO PLASMON, TEDDI SCALDASOLE), so that the end-product is able to provide only the nutritional factors correlated to the milk fermentation.

It was therefore an object of the present invention to provide a new yoghurt having nutritional values and total freshness characteristics which are original and different from those of similar product already on the market. The new "yoghurt" should combine moreover freshness, tastiness and texture to a strong nutritional connotation in order to make it particularly suitable for early childhood feeding owing to its high biologic value and to its good digeribility.

To this end the inventors carried out several studies for enhancing the nutritional, digeribility and organoleptic properties of the end-product, and they have found that when yoghurt is mixed with a particular, apart prepared semifinished product, and then eventually with fruit, a food can be obtained having a high biologic value which is particularly suitable for the early childhood feeding.

The proposed aim has been surprisingly reached by means of a yoghurt base added with valuable cereals meal mixture in soja extract, said mixture being previously fermented separately with Bifidobacterium Infantis eventually added with Streptococcus thermophilus. To the natural product thus obtained mashed fruit, eventually aromatized and suitably refined for having the creamy aspect and the homogeneity requested by the early chilhood, was then added.

It is accordingly an object of the present invention to provide a base yoghurt added with cereals meal mixture, as oats, rice, wheat seed, in soja extract, prefermented separately with Bifidobacterium Infantis to which eventually St. thermophilus has been added. To the natural product thus obtained mashed fruit, suitably refined to 0,2 mm and, if it is desired, aromatized in order to have the creamy taste and homogeneity requested in the early childhood feeding, was then added.

Further object of the invention was to provide a process for preparing the yoghurt added with a cereals meal mixture in soja extract, said mixture being separately prefermented with Bifidobacterium Infantis and eventually with St. thermophilus, and with fruit pulp, said process being characterized in that the yoghurt base was first obtained according to well known procedures, and apart a semifinished product with high nutritional value was prepared, obtained by fermenting with a concentrated colture at direct inoculum of Bifido Infantis of human source, and eventually of St. thermophilus, a substrate consisting of:
- soja seed extract,
- rice meal + wheat seed and oats, rich in essential amino acids and essential, polyunsatured fatty acids, absolutely necessary for promoting the early childhood growth. The cysteine/cystine content of wheat seed is 293 mg/100 g, whereas that of rice meals is of 85 mg/100 g. Furthermore, the use of soja extract as a dispersing material for the meals mixture allow to obtain, owing to fermentation, derivatives of high nutritional value and simple elements enhancing the global biologic value and the end digeribility of yoghurt.

It has been found that soja extract is an excellent substrate for enhancing the Bifido fermentative activity. The semifinished product thus obtained is accordingly, after fermentation, a mixture of prefermented cereals (oats, rice, wheat seed) and soja. The semifinished product obtained from fermentation with Bifido Infantis, and eventually with additions of St. thermophilus, is then mixed with yoghurt after lactic curd rupture. Said process allows to obtain a base yoghurt having a suitable consistency and exclusive organoleptic and nutritional characteristics.

It is to point out that the added semifinished product amount will depend on the desired nutritive elements level desired for the end-product.

If it is desired, mixing of base yoghurt with eventually aromatized and sweetened (with fructose and/or saccharose) fruit is then carried out. This is in particular very refined (until 0.2 mm), suitable for early childhood fruit pulp, in the well established and compatible tastes. Only like an example, apple, pear, apricot, pineapple, banana and eventually strawberry can be mentioned, which exhibit organoleptic, particularly selected characters for infants.

It has been ascertained that Bifido Infantis performs its fermentative activity in the best conditions without antagonism with the yoghurt lactic ferments. Said separate fermentation, further to digesting the above mentioned soja and cereals, allows to obtain fermentation intermediates contributing to the best develope and to the best time stability of Bifidobacterium Infantis, which as a consequence keeps live, viable and in a high level until the end life of the product, also when in the presence of the yoghurt specific lactic ferments.

It has been also found that, in comparison with the products already on the market, the separated fermentation with Bifido Infantis and eventually St. thermophilus of the vegetal components mixture is able to give such a predigestion, that then a bioavailability of the secundary metabolits with high nutritional value is achieved (essential amino acids, mono- and polyunsatured fatty acids), so that said metabolites, after having added said preparation to the yoghurt, enhamce the global biologic value of the end-product and also its digeribility and assimilability. The soja extract and the particular cereals types employed in the mixture to be fermented separately with Bifido are among those very often used for the early childhood feeding, in that they consist of the nutritive ingredients absolutely necessary for the childhood growth. In particular cereals have been employed having the following characteristics:
a) Wheat seed
   carbohydrates content (28.2 g)
   mineral compounds content (4.2 g)
   fat (9.2 g)
   water (11.7 g)
   proteins (26.6 g)
   wherein all the amounts are based on 100 g of edible portion;
b) Rice
   carbohydrates content (78.4 g)
   mineral substances content (0.5 g)
   water (12.9 g)
   fat (0.6 g)
   proteins (7.0 g);
c) Soja
   carbohydrates content (6.1 g)
   mineral substances content (4.7 g)
   water (8.5 g)
   fat (36.9 g)
   proteins (36.9 g);
d) Oats
   carbohydrates content (61.7 g)
   mineral substances content (1.8 g)
   water (10.0 g)
   fat (7.0 g)
   proteins (13.5 g).

Logically, these characteristics are merely indicative and of course alternative cereal combinations, directed towards different and specific nutritional requirements, could be used. However, the direct inoculum with a selected Bifidobacterium Infantis colture on cereal/soja substrate occurs at the rate of 25 g/100 l, corresponding to 0.025%. The human origin of the used strain has been ascertained by Laboratorium Wiesby GmbH & Co., Germany. The eventual addition of St. thermophilus occurred at a maximum amount of 0.5%.

As mentioned above, the semifinished product obtained from fermentation (at 37°C) with Bifidobacterium Infantis and eventually St. thermophilus is mixed with yoghurt. It has been found to be suitable a mixing ratio of 5:95, with the possibility to change said ratio owing to different nutritional requirements until 10:90.

Subsequently the eventual addition of fruit preparation is accomplished. In this case, it has been found that from the point of view of taste, texture, creamy appearance and nutritional and organoleptic characteristics, the best results are achieved when a ratio of product (as obtained from mixing yoghurt with the semifinished product from fermentation) to fruit preparation of 80:20 was selected, preferably of 82:18.

From what stated above, it is easy to realize that the end-product should also be employed without adding the fruit preparation, and thereafter said product will be referred as "base product". Moreover, it is necessary to point out that the preparation of cereals mixture in soja extract was carried out according to the following steps;
- dispersion of pre-weighed cereals in soja extract at 50°C,
- pasteurization of the mixture at 95°C for 30 min,
- adjustment of the mixture temperature at 37°C, a suitable value for Bifidobacterium Infantis growth,
- inoculum with the selected Bifido and eventually St. thetmophilus colture, and
- fermentation at controlled temperature (37°C) for about 10-16 hours until a pH 4.4-4.7 was reached.

As mentioned above, the end-product can be employed both as such (without fruit adding) and as fruit preparation containing product. According to analysis the results of which are listed thereafter, it has been found that the total proteins level is 3.6% for base product and on average 3.0-3.1% for the fruit product, wherein the casein to lactoglobulins ratio is 7. The present proteins rise solely from natural proteins of fresh milk and of added cereals and soja. The creamy appearance of the new yoghurt is, therefore, imputable only to the proteins of fresh milk and cereals and soja, and not to the addition of powdered milk, serum proteins or particular thickeners which have been regarded normally as food additives. A high protein content, noticeable in similar products, is in fact generally imputable to addition of serum proteins, caseinates or powdered milk, and therefore of unconstitutive ingredients of fresh milk, which are added with thickening action and cause hyperproteic levels not corresponding to the user's alimentary requirements.

On a total lipids basis of 4.3% for base product and on average of 3.2% for fruit-containing product, the fatty saturated, mono- and polyunsaturated acids amounts are 65%, 28.5% and 6.5% respectively, based on 100 g of fat matter extracted from the product.

The linoleic and linolenic acids amounts, based again on 100 g of fat matter extracted from the product, are 5% for linoleic acid and 0.6% for linolenic acid, whereas the calcium/phosphorus ratio of about 1:1 is optimal for the calcium metabolism in infants.

The average characteristics of some of these new products are listed here below:

| BANANA PRODUCT | |
|---|---|
| Moisture | 73.8% |
| Ash | 0.9% |
| Proteins | 3.0% |
| Lipids | 2.9% |
| Fiber | |
| Total glucides | 17.7% |
| fructose | 0.3% |
| glucose | 0.5% |
| galactose | 1.0% |
| saccharose | 13.6% |
| lactose | 2.3% |
| starch | |
| Calcium (mg/100 g) | 114 |
| Phosphorus (mg/100 g) | 92 |
| Calories (kcal/100 g) | 109.3 |
| Calories (KJ/100 g) | 461 |

| APPLE PRODUCT | |
|---|---|
| Moisture | 73.7% |
| Ash | 0.8% |
| Proteins | 3.0% |
| Lipids | 3.2% |
| Fiber | |
| Total glucides | 18.5% |
| fructose | 0.6% |
| glucose | 0.6% |
| galactose | 1.6% |
| saccharose | 13.4% |
| lactose | 2.3% |
| starch | 0.0% |
| Calcium (mg/100 g) | 112 |
| Phosphorus (mg/100 g) | 93 |
| Calories (kcal/100 g) | 114.7 |
| Calories (KJ/100 g) | 483 |

| PINEAPPLE PRODUCT | |
|---|---|
| Moisture | 75.7% |
| Ash | 0.9% |
| Proteins | 2.6% |
| Lipids | 3.5% |
| Fiber | |
| Total glucids | 18.8% |
| fructose | 0.5% |
| glucose | 0.7% |
| galactose | 1.8% |
| saccharose | 13.5% |
| lactose | 2.3% |
| starch | 0.0% |
| Calcium (mg/100 g) | 109 |
| Phosphorus (mg/100 g) | 93 |
| Calories (kcal/100 g) | 117.1 |
| Calories (KJ/100 g) | 493 |

| PEAR PRODUCT | |
|---|---|
| Moisture | 74.1% |
| Ash | 0.8% |
| Proteins | 3.1% |
| Lipids | 3.2% |
| Fiber | |
| Total glucides | 18.9% |
| fructose | 0.6% |
| glucose | 0.5% |
| galactose | 1.6% |
| saccharose | 13.8% |
| lactose | 2.4% |
| starch | |
| Calcium (mg/100 g) | 112 |
| Phosphorus (mg/100 g) | 93 |
| Calories (kcal/100 g) | 116.7 |
| Calories (KJ/100 g) | 492 |

| APRICOT PRODUCT | |
|---|---|
| Moisture | 77.0% |
| Ash | 0.8% |
| Proteins | 3.1% |
| Lipids | 3.0% |
| Fiber | |
| Total glucides | 18.5% |
| fructose | 0.7% |
| glucose | 0.8% |
| galactose | 1.4% |
| saccharose | 13.2% |
| lactose | 2.5% |
| starch | 0.0% |
| Calcium (mg/100 g) | 113 |
| Phosphorus (mg/100 g) | 89 |
| Calories (kcal/100 g) | 113.0 |
| Calories (KJ/100 g) | 477 |

| STRAWBERRY PRODUCT | |
|---|---|
| Moisture | 76.9% |
| Ash | 0.8% |
| Proteins | 3.1% |
| Lipids | 2.9% |
| Fiber | |
| Total glucids | 18.7% |
| fructose | 0.8% |
| glucose | 1.0% |
| galactose | 1.5% |
| saccharose | 12.9% |
| lactose | 2.4% |
| starch | |
| Calcium (mg/100 g) | 114 |
| Phosphorus (mg/100 g) | 94 |
| Calories (kcal/100 g) | 113.4 |
| Calories (KJ/100 g) | 478 |

| NATURAL (BASE) PRODUCT | |
|---|---|
| Moisture | 84.2% |
| Ash | 0.9% |
| Proteins | 3.6% |
| Lipids | 4.3% |
| Fiber | |
| Total glucids | 8.8% |
| fructose | 0.0% |
| glucose | 0.2% |
| galactose | 1.3% |
| saccharose | 4.5% |
| lactose | 2.9% |
| starch | |
| Calcium (mg/100 g) | 137 |
| Phosphorus (mg/100 g) | 119 |
| Calories (kcal/100 g) | 88.0 |
| Calories (KJ/100 g) | 369. |

The invention will now be illustrated by the following example

### EXAMPLE

Yoghurt was obtained from whole milk titred after concentration at 4.5% of fat matter and at 3.6% of proteins for having in the end-product after fruit metering about 3.3% of fat matter. Sweetening of base yoghurt was achieved by using 3-5% saccharose and/or fructose in the milk.

Apart a semifinished product was prepared by fermenting at 37°C for 10-16 hours with a concentrated Bifidobacterium Infantis colture at direct inoculum, eventually added with St. thermophilus, a substrate comprising soja extract and rice, oats and wheat seed meals, in which the inoculum was preferably carried out at the rate of 25 g/100 l. The eventually inoculum carried out with St. thermophilus was accomplished at the rate of maximal 0.5%.

The semifinished product thus obtained was then mixed with yoghurt at 40°C and at the ratio of 5:95. the product of this mixing was then added with a fruit preparation contained in aseptic containers at the ratio of base yoghurt/substrate to fruit of 82:18.

The cereals/soja extract mixing was carried out as follows: cereals were dispersed at 50°C in soja extract, the mixture was then pasteurized at 95°C for 30 minutes and at least the temperature was adjusted at the value of 37°C, suitable for the Bifidobacterium Infantis growth. At this point, a selected colture of Bifidobacterium Infantis and eventually St. thermophilus was inoculated and the whole was fermented for 10-16 hours at a controlled temperature until a pH of 4.6-4.7 was reached.

## Claims

1. Yoghurt containing live lactic ferments for the early childhood feeding, characterized in that it contains a yoghurt base and a previously prepared mixture of cereals meal in soja extract, said mixture being separately prefermented with Bifidobacterium Infantis eventually added with Streptococcus thermophilus.

2. Yoghurt according to claim 1, characterized in that Bifidobacterium Infantis is of proved human source.

3. Yoghurt according to claim 1, characterized in that the prefermented mixture comprises cereal meal (oats, rice, wheat seed) and soja extract.

4. Yoghurt according to claim 1, characterized in that it further contains homogenized, eventually aromatized and 0.2 mm refined fruit pulp, wherein said fruit is selected from the group consisting of apple, pear, banana, apricot, pineapple and strawberry.

5. Yoghurt according to claim 1, characterized in that the mixture is obtained from fermentation at 37°C, with concentrated direct inoculum colture of Bifidobacterium Infantis and eventually St. thermophilus, of a substrate comprising soja extract and rice, oats and wheat seed meals.

6. Yoghurt according to claim 5, characterized in that the direct inoculum with Bifidobacterium Infantis colture into cereal/soja substrate is accomplished at the rate of 25 g/100 l = 0.025%.

7. Yoghurt according to claim 5, charcaterized in that the direct inoculum with St. thermophilus into cereals/soja substrate is accomplished at the rate of at most 0.5%.

8. Yoghurt according to claim 1, characterized in that the mixing ratio of yoghurt to cereals/soja substrate is preferably of 95:5.

9. Yoghurt according to claim 4, charcaterized in that the yoghurt/substrate to fruit pulp ratio is 80:20, preferably 82:18.

10. Yoghurt according to claim 5, characterized in that the cereals meal to soja ratio is preferably 5:95.

11. Process for preparing a yoghurt according to claim 1, characterized in that to the yoghurt prepared by an usual method a mixture obtained from the fermentation at 37°C, with concentrated direct inoculum colture of Bifidobacterium Infantis and eventually St. thermophilus, of a susbtrate comprising soja extract and rice, oats and wheat seed meals is added.

12. Process according to claim 11, characterized in that the cysteine/cystine content in wheat seed is of 292 mg/100 g, whereas in rice meal is of 85 mg/100 g.

13. Process according to claim 11, characterized in that the cereals mixture is obtained by dispersing cereals in soja extract at 50°C, pasteurizing said mixture for 30 minutes at 95°C, adjusting the temperature at 37°C, inoculating with a Bifidobacterium Infantis and eventually St. thermophilus colture, and fermenting at a constant temperature for 10-16 hours until an acidity suitable for the mixture with yoghurt is reached.

14. Process according to claim 13, characterized in that the pH value suitable for the mixing with yoghurt is 4.6-4.7.

15. Process for preparing a yoghurt according to claim 4, characterized in that to the mixture yoghurt/cereals meals in soja extract, a homogenized, eventually aromatized and 0.2 mm refined fruit composition selected from the group consisting of apple, pear, apricot, pineapple, strawberry and banana is added, wherein the yoghurt/cereal meals + soja to fruit pulp ratio is 80:20, preferably 82:18.
